# EUROPEAN PATENT SPECIFICATION

(11) **EP 2 034 289 B1**
(45) Date of publication and mention of the grant of the patent: **18.04.2012**
(21) Application number: 08014314.2
(22) Date of filing: 11.08.2008
(51) Int. Cl.: G01M 15/02

(54) **Restraint device**
Haltevorrichtung
Dispositif de retenue

(30) Priority: 04.09.2007 JP 2007228597
(43) Date of publication of application: 11.03.2009
(73) Proprietor: ONO SOKKI CO., LTD., Yokohama-shi Kanagawa 226-8507 (JP)
(72) Inventor: Sato, Koji, Yokohama-shi, Kanagawa 226-8507 (JP); Echigo, Kentaro, Yokohama-shi, Kanagawa 226-8507 (JP); Maesoma, Kousuke, Yokohama-shi, Kanagawa 226-8507 (JP)
(74) Representative: Strehl Schübel-Hopf & Partner

(56) References cited:
- DE-U1-202005 009 928
- JP-A- 2000 105 173
- US-A1- 2006 243 085

## Description

The present invention relates to the technology for restraining the movement of an object.

As the technology for restraining the movement of an object, a support device, which supports the engine in the engine test system is known (See Japan Published unexamined patent application No. 2000-105173 for example). This support device is used for testing engines in such way to restrain the parallel movement of the engine in the direction perpendicular to the crankshaft (output shaft) of the engine, while permitting the oscillation around three orthogonal axes.

Oscillation of an engine installed in motor vehicle is the oscillation around the axis which passes through the gravity center of the engine. Therefore, in order to reproduce closest as possible conditions of the engine as being installed in the motor vehicle in the engine test system and others, it is necessary to support the engine in such a way that the oscillation around the axis passing through the gravity center of the engine is permitted.

However, in the support device according to the aforementioned Patent Document 1, the oscillation around three orthogonal axes is permitted, but the axis of oscillation is always the axis passing through the junction connecting the support device and the engine, and not the axis passing through the gravity center of the engine.

Accordingly, the present invention aims at providing restraint device which restrains the object in such a way to permit oscillation around any desired position of the object.

In order to solve the aforementioned problems, the present invention provides, as a restraint device to restrain the movement of the object against its base, a restraint device is equipped with a link mechanism comprising multiple rotary joints having a rotation axis passing through the restraint points set inside the aforementioned object, and multiple links serially connected by the aforementioned multiple rotary joints. Here, the said link is set in such a direction that the direction of the rotation axes of two rotary joints located at both ends of the said link differ, one end of the link mechanism is fixed on the object, and the other end of the link mechanism is connected directly or indirectly with the base.

According to such restraint device, the possible rotation or oscillation of the object against the other end of the link mechanism is limited to the rotation or oscillation around at least two orthogonal axes passing through the restraining point of the said object.

Accordingly, by connecting the other end of the aforementioned link mechanism with the base in such a manner as to prevent the movement or to permit only parallel movement, the object can be restrained in such a way that oscillation and rotation only around the restraint point of the object is permitted. In this case, since the restraint point can be set at any position such as gravity center of the object, by using this link mechanism, the object can be restrained in a way that oscillation around any position of the object is permitted.

Here, such restraint device can be equipped with a parallel movement mechanism, one end of which is connected with said other end of the link mechanism while the other end of which is fixed on the base, wherein the parallel movement mechanism permits parallel movement against the aforementioned base at the other end of the aforementioned link mechanism only in the one-axis direction or in the two-orthogonal axis directions.

Hereby, the parallel movement of the object can be restricted only to the axis direction, the parallel movement in which is not permitted by the parallel movement mechanism.

Also, in the restraint device explained about the link mechanism may be equipped with three or more rotary joints having the rotation axis passing through the restraint point. Hereby, rotation or oscillation of the object is permitted only around orthogonal 3 axes with the restraint point of the object.

Also, the foregoing restraint device may comprise multiple aforementioned link mechanism, each of which are installed for each of the multiple restraint points set inside the object, wherein the rotation axis of the multiple rotary joint of each link mechanism may be set as an axis passing through corresponding restraint point.

Hereby, any axis set for the object can be restrained by using two restraint points, and any plane set for the object can be restrained by using three restraint points.

The foregoing restraint device can be used, together with an actuator which moves the base, to configure a movement mechanism, which moves a restraint point of the object while permitting the rotation and oscillation of the object around the axis passing through the restraint point and the parallel movement of the object in the direction of a part of axes as mentioned above.

As stated above, according to the present invention, the restraint device, which restrains the object in a way to permit the oscillation around arbitrary desired position of the object is provided.

Embodiments of the present invention will be explained with reference to the attached drawings, where
Figure 1 is a block diagram showing the configuration of the engine test system of one embodiment of the present invention,
Figure 2 is a diagram showing the configuration of the restraint link mechanism of one embodiment of the present invention, and
Figure 3 is a diagram showing another configuration of the restraint link mechanism of one embodiment of the present invention.
   In the drawings, each notations represents the followings: 1 ...engine, 2 ...dynamometer, 3 ...support stand, 4 ...restraint link mechanism, 40 ...junction, 41 ...first link, 42 ...second link, 43 ...third link, 44 ...fourth link, 45 ...fifth link, 46 ...sixth link, 47 ...seventh link, 48 ...eighth link, 49 ...ninth link, 51 ...first axis link, 52 ...second axis link, 53 ...third axis link, 54 ...first XY link, 55 ...second XY link, 56 ...fixing link, 412 ...first rotary joint, 423 ...second rotary joint, 434 ...third rotary joint, 445 ...fourth rotary joint, 456 ...fifth rotary joint, 467 ...sixth rotary joint, 478 ...seventh rotary joint, 489 ...eighth rotary joint, 512 ...first axis rotary joint,523 ......second axis rotary joint,534 ...third axis rotary joint,545 ...first z-axis rotary joint, 556 ...second z-axis rotary joint.

Embodiments of the present invention will be explained below with reference to the applications to the restraint of the gravity of center of engines in the engine test system.

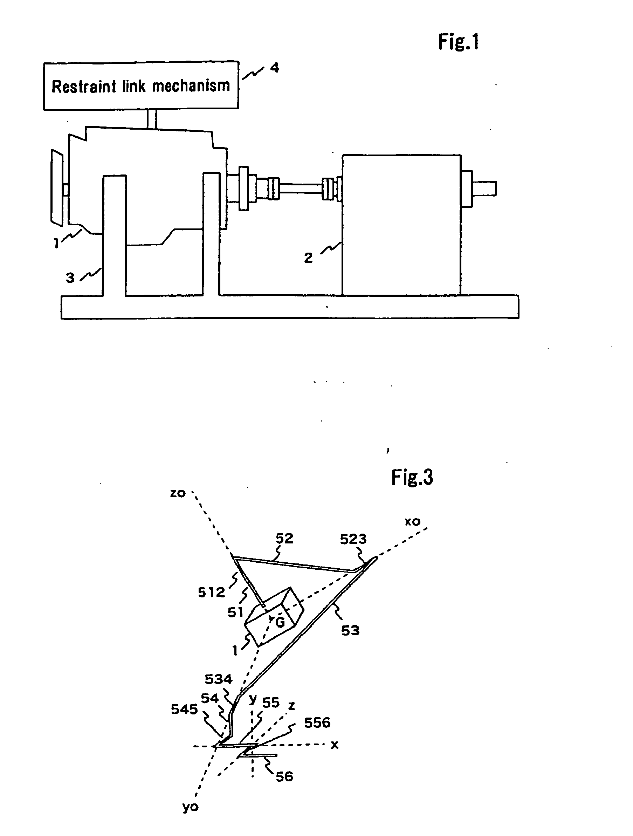

Figure 1 shows the configuration of the engine test system related to the present embodiment.
As illustrated in the figure 1, the engine test system is mounted with engine 1 to be tested and equipped with dynamometer 2, which applies torque TQ to the output shaft(e.g. crankshaft) of the engine 1, and support stand 3 for supporting the engine 1 via the engine mount as in the case of motor vehicle. It is also equipped with the restraint link mechanism 4, which restrains the movement in the direction of output shaft of the engine 1, while permitting rotation (oscillation) around the gravity center of the engine 1 and movement in the direction perpendicular to the output shaft of the engine 1.

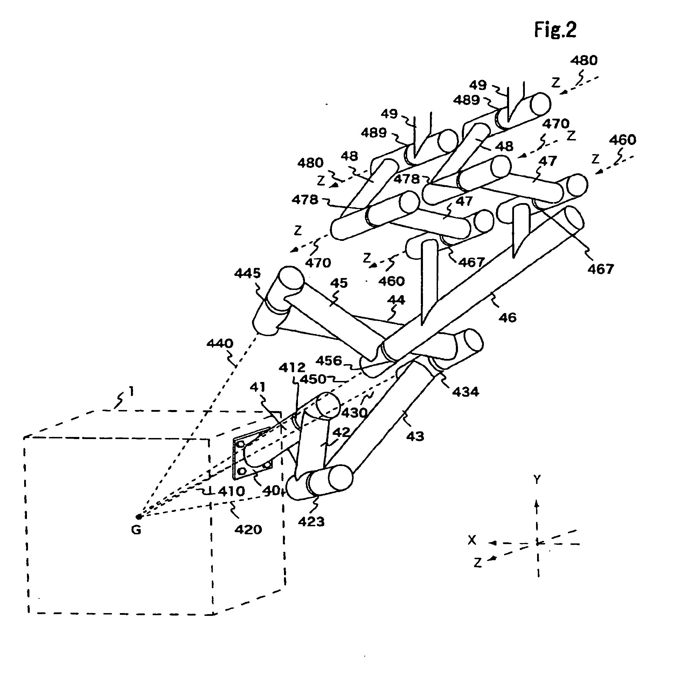

The structure of the restraint link mechanism 4 is shown in Figure 2.
As illustrated, the restraint link mechanism 4 comprises first link 41, second link 42, third link 43, fourth link 44, fifth link 45, sixth link 46 and two seventh links 47 and two eighth links 48 and two ninth links 49.

One end of the first link 41 is fixed on the engine 1 at the junction 40.
The other end of the first link 41 is connected to one end of the second link 42 with the first rotary joint 412. The other end of the second link 42 is connected to one end of the third link 43 with the second rotary joint 423 while the other end of the third link 43 is connected to one end of the fourth link 44 with the third rotary joint 434. The other end of the fourth link 44 is connected to one end of the fifth link 45 with the fourth rotary joint 445, while the other end of the fifth link 45 is connected to one end of the sixth link 46 with the sixth rotary joint 456. The sixth link 46 is connected, at the other end side, to either end of two seventh links 47 with two sixth rotary joints 467, and each of the other ends of two seventh links 47 is connected to each of the one end of two eighth links 48 respectively with two seventh rotary joints 478. Each of the other ends of two eighth links 48 is connected to one end of two ninth links 49 with two eighth rotary joints 489 respectively.

And, the other ends of the ninth links 49 are fixed to the support stand 3.
In such configuration, the rotation axis 410 of the first rotary joint 412, the rotation axis 420 of the second rotary joint 423, the rotary axis 430 of the third rotary joint 434, the rotation axis 440 of the fourth rotary joint 445 and the rotary axis 450 of the fifth rotary joint 456 are set as an axis passing through the gravity center G of the engine 1. Since these five rotary axes move by rotating around other rotation axis which passes through the gravity center G of the engine 1, these rotation axes always can be the axis passing through the gravity center G of the engine 1. Also, the directions of the rotation axis 410 of the first rotary joint 412 and the rotation axis 420 of the second rotary joint 423, the directions of the rotary axis 420 of the second rotary joint 423 and the rotation axis 430 of the third rotary joint 434, and the directions of the rotary axis 430 of the third rotary joint 434 and the rotation axis 440 of the fourth rotary joint 445 and the directions of the rotary axis 440 of the fourth rotary joint 445 and the rotation axis 450 of the fifth rotary joint 456 always differ depending on the distance to the gravity center G of the engine 1 and the length of the link between rotation axes.

As a result, three degree of freedom rotation (oscillation) of the engine 1 within a certain range, consisting of rotations around these five rotation axes, is permitted, in which the center of the rotation is always the gravity center G of the engine 1. Then, the rotation axis 460 of the sixth rotary joint 467, the rotation axis 470 of the seventh rotary joint 478 and the rotation axis 480 of the eighth rotary joint 489 are set to be in the direction of the output shaft of the engine 1 (direction Z in the figure).

Therefore, for the engine 1 and the gravity center thereof, the parallel movement perpendicular to the output shaft of the engine 1 (movement in X-Y direction in the figure), which is obtained by combining the rotation of the eighth link 48 around the output shaft to the ninth link 49 and the rotation of the seventh link 47 around the output shaft to the eighth link 48, is permitted.

As a result of the foregoing, only the movement in the direction of the output shaft (direction z in the figure) of the engine 1 will be restrained.

Embodiments of the present invention have been explained above.
The restraint link mechanism 4 shown in Figure 2 can be configured, by fixing the sixth link 46 directly on the support stand 3, as a link mechanism which permits the three degree of freedom rotation (oscillation) of the engine 1 centering on the gravity center and restrains the parallel movement of the engine 1 in the directions from front to back, from side to side and up and down. By connecting the sixth link 46 with the mechanism, which permits only the parallel movement in any one-axis direction, the restraint link mechanism can also be configured as a mechanism to permit the three degree of freedom rotation (oscillation) of the engine 1 centering on the gravity center and restrain the parallel movement in the two-axis direction perpendicular to any aforementioned one-axis direction of the engine 1.

Meanwhile, such restraint link mechanism 4 can be configured as shown schematically in Figure 3.
As illustrated, this restraint link mechanism 4 comprises the first axis link 51, the second axis link 52, the third axis link 53, the first XY axis link 54, the second XY axis link 55 and the fixing link 56.

And, one end of the link for the first axis 51 is fixed on the engine 1.
And, the other end of the first axis link 51 is connected with one end of the second axis link 52 by the first axis rotary joint 512. The other end of the second axis link 52 is connected to one end of the third axis link 53 by the second axis rotary joint 523, while the other end of the third axis link 53 is connected with one end of the first XY axis link 54 by the third axis rotary joint 534. And the other end of the first XY axis link 54 is connected to one end of the second XY axis link 55 by the first z-axis rotary joint 545, while the other end of the second XY axis link 55 is connected to one end of the fixing link 56 by the second z-axis rotary joint 556.
The other end of the fixing link 56 is fixed to the support stand 3.

In such configuration, the rotation axis of the first axis rotary joint 512, the rotation axis of the second axis rotary joint 523 and the rotation axis of the third axis rotary joint 534 are set to pass through the gravity center of the engine 1 respectively. As shown in the figure, the directions of these rotation axes and the length of the first axis link 51, the second axis link 52 and the third axis link 53 have been determined to enable these three rotation axes to agree with three orthogonal axes (XO, YO and ZO in Figure) on a coordinate set for the engine 1.

Consequently, as it is apparent from the figure, the three degree of freedom rotation (oscillation) combining rotations around these three rotation axes of the engine 1 is permitted, where the center of the rotation (oscillation) is always the gravity center G of the engine 1.

Then, the directions of the rotation axis of the first z-axis rotary joint 545 and the rotation axis of the second z-axis rotary joint 556 are set to be identical with the direction of the output shaft of the engine 1.

Therefore, for the engine 1 and the gravity center thereof, the parallel movement perpendicular to the output shaft of the engine 1 (X-Y direction in the figure), which is obtained by combining the rotation of the second XY link 55 around the output shaft to the fixing link 56 and the rotation of the first XY link 54 around the output shaft to the second XY link 55, is permitted.

As a result of the foregoing, the movement of the engine 1 only in the direction of the output shaft (z-direction in the figure) is restrained. The restraint link mechanism 4 shown in Figure 3 can be configured, by fixing the first XY axis link 54 directly on the support stand 3, as a link mechanism which permits only the three degree of freedom rotation (oscillation) of the engine 1 centering on the gravity center and restrains the parallel movement of the engine 1 in the directions from front to back, from side to side and up and down.

By connecting the first XY link 54 with the mechanism which permits only the parallel movement in any one-axis direction, the restraint link mechanism can also be configured as a mechanism to permit the three degree of freedom rotation (oscillation) of the engine 1 centering on the gravity center and restrain the parallel movement in the two-axis direction perpendicular to any aforementioned one-axis direction of the engine 1.

The foregoing explanation was on the example of applications to the engine test system, but the restraint link mechanism 4 according to this embodiment can be applied to restrain the movement of any object. In other word, for example, the present invention can be used for restraining the movement of motor vehicle and others in the chassis dynamometer used for testing motor vehicles. In the application for restraining the movement of motor vehicle in the chassis dynamometer, the restraint link mechanism 4 restrains only parallel movement in the directions from front to back of the gravity center of motor vehicle, while permitting the three degree of freedom rotation (oscillation) around the gravity center and the parallel movement of motor vehicle in directions from right to left and up and down. Or, it can be arranged to restrain the parallel movement of motor vehicle in the directions from front to back and right to left or in the directions from front to back, right to left and up and down, while permitting the three degree of freedom rotation (oscillation) around gravity center.

The foregoing embodiments showed the case in which the gravity center of the object such as engine and motor vehicles are restrained. However, the restraint link mechanism 4 according to the present embodiment can be used to restrain any point other than the gravity center of the object, including for example, the output points of the engine and others. Namely, in this case, a desired point in the object is set as a restraint point as a substitute for the gravity center, and the rotation axis of each rotary joint (the first rotary joint 412 - the fifth rotary joint 456 in Figure 2 and the first rotary joint 512 - the third rotary joint 534 in Figure 3), whose rotation axis is to pass through the gravity center in foregoing embodiments, is set as an axis to pass through the said restraint point.

Multiple points of the object can be restrained separately by using multiple restraint link mechanisms 4 shown in this embodiment. In doing so, any axis set for the object can be restrained by restraining 2 points as the restraint points, and any plane set for the object can be restrained by restraining 3 points as the restraint points.

Moreover, a movement mechanism can be configured with the restraint link mechanism 4 according to this embodiment by connecting the restraint link at the opposite end of the object fixing end with an actuator which moves the said opposite end. This movement mechanism is configured such that it moves the restraining points of the object while permitting rotation or oscillation of the object around the desired axis and parallel movement of the object along with the direction of a part of axes as aforementioned.

## Claims

1. A restraint device for restraining the movement of an engine (1) against the base of an engine test system,
the restraint device having a link mechanism comprising a plural number of rotary joints (412, 423, 434, 445, 456) and a plural number of links (41, 42, 43, 44, 45, 46) serially connected by the plural number of rotary joints,
one end of the link mechanism being adapted to be connected directly or indirectly to the base of the engine test system,
**characterised in that**
the directions of the rotation axes of two rotary joints positioned on both ends of each link differ such that their rotation axes pass through a restraint point, and
one end of the link mechanism is adapted to be fixed on an engine (1) such that the restraint point lies inside of the engine.

2. A restraint device for restraining the movement of a motor vehicle against the base of a motor vehicle test system,
the restraint device having a link mechanism comprising a plural number of rotary joints (412, 423, 434, 445, 456) and a plural number of links (41, 42, 43, 44, 45, 46) serially connected by the plural number of rotary joints,
one end of the link mechanism being adapted to be connected directly or indirectly to the base of the motor vehicle test system,
**characterised in that**
the directions of the rotation axes of two rotary joints positioned on both ends of each link differ such that their rotation axes pass through a restraint point, and
one end of the link mechanism is adapted to be fixed on a motor vehicle such that the restraint point lies inside of the motor vehicle.

3. The restraint device according to any preceding claim
having a parallel movement mechanism, one end of which is connected with said other end of the link mechanism and the other end of which is connected with the base,
wherein the parallel movement mechanism is adapted to permit parallel movement of the end of the link mechanism against the base only in one-axis direction or orthogonal two-axis directions.

4. The restraint device according to any preceding claim, wherein the link mechanism is equipped with three or more of said rotary joints having the rotation axis passing through the restraint point.

5. The restraint device according to any preceding claim,
having a plural number of the link mechanism installed corresponding to each of the multiple restraint points set inside the object,
wherein each link mechanism is equipped with multiple said rotary joints, the rotation axis of which passes through corresponding restraint points.

6. A movement mechanism comprising a restraint device according to any preceding claim and an actuator for moving the base.

## Patentansprüche

1. Rückhaltevorrichtung zum Zurückhalten der Bewegung eines Motors (1) gegen den Sockel eines Motortestsystems, wobei
die Rückhaltevorrichtung einen Verbindungsmechanismus aufweist, der mehrere Drehgelenke (412, 423, 434, 445, 456) und mehrere durch diese seriell verbundenen Verbindungen (41, 42, 43, 44, 45, 46) enthält und
ein Ende des Verbindungsmechanismus zur direkten oder indirekten Verbindung mit dem Sockel des Motortestsystems ausgelegt ist,
**dadurch gekennzeichnet, dass**
die Richtungen der Rotationsachsen von zwei an beiden Enden jeder Verbindung angeordneten Drehgelenken sich so unterscheiden, dass ihre Rotationsachsen durch einen Rückhaltepunkt verlaufen, und
ein Ende des Verbindungsmechanismus zur derartigen Befestigung an einem Motor (1) ausgelegt ist, dass der Rückhaltepunkt innerhalb des Motors liegt.

2. Rückhaltevorrichtung zum Zurückhalten der Bewegung eines Kraftfahrzeugs gegen den Sockel eines Kraftfahrzeugtestsystems, wobei
die Rückhaltevorrichtung einen Verbindungsmechanismus aufweist, der mehrere Drehgelenke (412, 423, 434, 445, 456) und mehrere durch diese seriell verbundenen Verbindungen (41, 42, 43, 44, 45, 46) enthält und
ein Ende des Verbindungsmechanismus zur direkten oder indirekten Verbindung mit dem Sockel mit dem Sockel des Kraftfahrzeugtestsystems ausgelegt ist,
**dadurch gekennzeichnet, dass**
die Richtungen der Rotationsachsen von zwei an beiden Enden jeder Verbindung angeordneten Drehgelenken sich so unterscheiden, dass ihre Rotationsachsen durch einen Rückhaltepunkt verlaufen, und
ein Ende des Verbindungsmechanismus zur derartigen Befestigung an einem Kraftfahrzeug ausgelegt ist, dass der Rückhaltepunkt innerhalb des Kraftfahrzeugs liegt.

3. Rückhaltevorrichtung nach einem der vorhergehenden Ansprüche
mit einem Parallelbewegungsmechanismus, dessen eines Ende mit dem anderen Ende des Verbindungsmechanismus und dessen anderes Ende mit dem Sockel verbunden ist,
wobei der Parallelbewegungsmechanismus so ausgelegt ist, dass er eine Parallelbewegung des Endes des Verbindungsmechanismus gegen den Sockel nur in einer Achsrichtung oder in zwei orthogonalen Achsrichtungen zulässt.

4. Rückhaltevorrichtung nach einem der vorhergehenden Ansprüche, wobei der Verbindungsmechanismus mit drei oder mehr der Drehgelenke ausgestattet ist, die die durch den Rückhaltepunkt verlaufende Rotationsachse aufweisen.

5. Rückhaltevorrichtung nach einem der vorhergehenden Ansprüche
mit mehreren Verbindungsmechanismen, die entsprechend zu jedem der mehreren innerhalb des Objekts liegenden Rückhaltepunkte installiert sind,
wobei jeder Verbindungsmechanismus mit mehreren der Drehgelenken ausgestattet ist, deren Rotationsachse durch entsprechende Rückhaltepunkte verläuft.

6. Bewegungsmechanismus mit einer Rückhaltevorrichtung nach einem der vorhergehenden Ansprüche und einem Aktuator zum Bewegen des Sockels.

## Revendications

1. Dispositif de retenue pour retenir le mouvement d'un moteur (1) contre la base d'un système d'essai de moteur,
le dispositif de retenue ayant un mécanisme de liaison comportant une pluralité de joints tournants (412, 423, 434, 445, 456) et une pluralité de liaisons (41, 42, 43, 44, 45, 46) reliées en série par l'intermédiaire de la pluralité de joints tournants,
une extrémité du mécanisme de liaison étant adaptée pour être directement ou indirectement reliée à la base du système d'essai de moteur,
**caractérisé en ce que**
les directions des axes de rotation de deux joints tournants positionnés sur les deux extrémités de chaque liaison diffèrent de sorte que leurs axes de rotation passent par un point de retenue, et
une extrémité du mécanisme de liaison est adaptée pour être fixée sur un moteur (1) de sorte que le point de retenue se trouve à l'intérieur du moteur.

2. Dispositif de retenue pour retenir le mouvement d'un véhicule à moteur contre la base d'un système d'essai de véhicule à moteur,
le dispositif de retenue ayant un mécanisme de liaison comportant une pluralité de joints tournants (412, 423, 434, 445, 456) et une pluralité de liaisons (41, 42, 43, 44, 45, 46) reliées en série par de la pluralité de joints tournants,
une extrémité du mécanisme de liaison étant adaptée pour être directement ou indirectement reliée à la base du système d'essai de véhicule à moteur,
**caractérisé en ce que**
les directions des axes de rotation de deux joints tournants positionnés sur les deux extrémités de chaque liaison diffèrent de sorte que leurs axes de rotation passent par un point de retenue, et
une extrémité du mécanisme de liaison est adaptée pour être fixée sur un véhicule à moteur (1) de sorte que le point de retenue se trouve à l'intérieur du véhicule à moteur.

3. Dispositif de retenue selon l'une quelconque des revendications précédentes ayant un mécanisme de mouvement parallèle, une extrémité de celui-ci étant reliée à ladite autre extrémité du mécanisme de liaison et son autre extrémité étant reliée à la base,
le mécanisme de mouvement parallèle étant adapté pour permettre un mouvement parallèle de l'extrémité du mécanisme de liaison contre la base uniquement dans une direction mono-axiale ou des directions bi-axiales orthogonales.

4. Dispositif de retenue selon l'une quelconque des revendications précédentes, dans lequel le mécanisme de liaison est équipé de trois ou plus de trois desdits joints tournants ayant l'axe de rotation passant par le point de retenue.

5. Dispositif de retenue selon l'une quelconque des revendications précédentes, ayant une pluralité de mécanismes de liaison installés correspondant à chacun des multiples points de retenue établis à l'intérieur de l'objet,
chaque mécanisme de liaison étant équipé de plusieurs desdits joints tournants, l'axe de rotation desquels passant par les points de retenue correspondants.

6. Mécanisme de mouvement comportant un dispositif de retenue selon l'une quelconque des revendications précédentes et un actionneur pour déplacer la base.
